# EUROPÄISCHE PATENTSCHRIFT

(11) **EP 3 853 276 B1**
(45) Veröffentlichungstag und Bekanntmachung des Hinweises auf die Patenterteilung: **05.11.2025**
(21) Anmeldenummer: 19769500.0
(22) Anmeldetag: 19.09.2019
(51) Int. Cl.: C08G 18/62, C08G 18/73, C08G 18/79, C08G 18/24, C08G 18/40, C08G 18/42, C09D 175/06, C08K 3/22, C08K 3/26, C08K 3/30

(54) **POLYURETHAN-BESCHICHTUNG MIT SCHNELLER TROCKNUNGSZEIT**
POLYURETHANE COATING WITH FAST DRYING TIME
REVÊTEMENT DE POLYURÉTHANE À TEMPS DE SÉCHAGE PLUS RAPIDE

(30) Priorität: 19.09.2018 EP 18195450
(43) Veröffentlichungstag der Anmeldung: 28.07.2021
(73) Patentinhaber: Sherwin-Williams Coatings Deutschland GmbH, 42389 Wuppertal (DE)
(72) Erfinder: VIERTEL, Gemma, 71665 Vahihingen/Enz (DE); SEIDEL, Sandra, 75417 Mühlacker (DE)
(74) Vertreter: Novagraaf Group
(86) Internationale Anmeldenummer: PCT/EP2019/075113
(87) Internationale Veröffentlichungsnummer: WO 2020/058379

(56) Entgegenhaltungen:
- US-A- 5 684 084
- US-A1- 2004 131 786
- US-A1- 2007 197 727
- US-B1- 9 120 916

## Beschreibung

### Technisches Gebiet

Die Erfindung betrifft eine bei Raumtemperatur flüssig applizierbare reaktive Polyurethan-Zusammensetzung, welche als Beschichtung, insbesondere als Schutzbeschichtung für Metalloberflächen im Hochbau oder in industriellen Anlagen einsetzbar ist.

### Stand der Technik

Flüssig applizierbare reaktive Polyurethan-Zusammensetzungen, welche als Beschichtungen oder Anstriche eingesetzt werden, sind seit längerem Stand der Technik. Handelsübliche Produkte enthalten typischerweise einen beträchtlichen Gehalt an flüchtigen organischen Lösemitteln um die Viskosität zu senken und somit die Verarbeitbarkeit zu verbessern. Weiter haben die Produkte des Standes der Technik typischerweise eine lange Trockenzeit von 6 - 18 Stunden. Weitere reaktive Polyurethan-Zusammensetzungen sind aus den US 9 120 916 B1, US 2004/131786 A1, US 5 684 084 A und US 2007/197727 A1 bekannt.

Es besteht daher der Bedarf an zweikomponentigen Polyurethan-Beschichtungen, welche auch bei hohem Feststoffgehalt vergleichsweise niedrigviskos sind, sich einfach applizieren lassen und eine kurze Trocknungszeit, insbesondere unter 4 Stunden, aufweisen. Weiter sollten solche Produkte eine ausreichende Pendelhärte und eine Gelierzeit zwischen 60 bis 180 Minuten gewährleisten.

### Darstellung der Erfindung

Aufgabe der vorliegenden Erfindung ist es daher, eine Polyurethanzusammensetzung zur Verfügung zu stellen, welche sich als zweikomponentige Beschichtung und Anstrich eignet und über eine kurze Trocknungszeit, eine ausreichende Pendelhärte und eine Gelierzeit zwischen 60 bis 180 Minuten verfügt.

Überraschenderweise wurde gefunden, dass eine Zusammensetzung nach Anspruch 1 diese Aufgabe löst.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Zusammensetzung bestehend aus
einer ersten Komponente enthaltend
   - mindestens ein Polyacrylatpolylol **PA,** welches basierend auf Isobornyl (Meth)acrylat ist,
   - mindestens ein Polyesterpolyol **PE** mit einer OH-Zahl zwischen 10 - 500 mg KOH/g,
und einer zweite Komponente enthaltend ein aliphatisches Polyisocyanat **B1;**
wobei das Polyacrylatpolylol **PA** und der Polyesterpolyol **PE** in einer solchen Menge vorhanden sind, dass das Gewichtsverhältnis **PA/PE** im Bereich von 1.75 bis 30, liegt, und wobei das mindestens eine Polyacrylatpolylol **PA** und das mindestens eine Polyesterpolyol **PE** zusammen mehr als 99 Gewichts-%, der NCO-reaktiven Gruppen, insbesondere der OH-Gruppen, der ersten Komponente enthalten, bezogen auf das Gesamtgewicht der ersten Komponente, und dadurch gekennzeichnet, dass die Zusammensetzung einen Anteil an Lösungsmitteln von 2 - 20 Gew.-%, 5 - 15 Gew.-%, insbesondere 7.5 - 12.5 Gew.-%, bezogen auf das Gesamtgewicht der Zusammensetzung, enthält.

Als "primäre Hydroxylgruppe" wird eine OH-Gruppe bezeichnet, welche an ein C-Atom mit zwei Wasserstoffen gebunden ist.

Als "primäre Aminogruppe" wird eine NH₂-Gruppe bezeichnet, die an einen organischen Rest gebunden ist und als "sekundäre Aminogruppe" wird eine NH-Gruppe bezeichnet, die an zwei organische Reste, welche auch gemeinsam Teil eines Rings sein können, gebunden ist.

Mit dem Begriff "Viskosität" wird im vorliegenden Dokument vorzugsweise eine Viskosität verstanden, welche gemessen wird mit einem Rheometer Physica MCR 301 Platte-Platte Rheometer bei 23°C, mit einem Messspalt von 0,5 mm gemäss DIN 53019-1.

Unter "Molekulargewicht" versteht man im vorliegenden Dokument die molare Masse (in Gramm pro Mol) eines Moleküls. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Raumtemperatur" wird eine Temperatur von 23 °C bezeichnet.

Als "zweikomponentig" wird eine Zusammensetzung bezeichnet, bei welcher die Bestandteile der Zusammensetzung in zwei verschiedenen Komponenten vorliegen, welche in voneinander getrennten Gebinden gelagert und erst kurz vor oder während der Applikation der Zusammensetzung miteinander vermischt werden.

Es handelt sich bei der Gelierzeit um die Zeitspanne zwischen der Zugabe der ersten Komponente zur zweiten Komponente und des Übergangs der gemischten Zusammensetzung vom flüssigen in den Gelzustand. Vorzugsweise wird die Gelierzeit bestimmt nach DIN 16 945.

Die Zusammensetzung weist in der ersten Komponente mindestens ein Polyacrylatpolylol **PA** auf, welches basierend auf Isobornyl (Meth)acrylat ist.

Geeignete Polyacrylatpolylol **PA** sind beispielsweise solche mit einem mittleren Molekulargewichtes von 800 bis 10000 g/mol, 1000 bis 5000 g/mol, 1500 bis 4000 g/mol, vorzugsweise von 2000 bis 4000 g/mol.

Vorteilhaft sind Polyacrylatpolylole **PA** mit OH-Zahlen zwischen 80 mg/KOH g bis 200 mg KOH/g, bevorzugt im Bereich von 100 mg KOH/g bis 180 mg KOH/g, und ganz besonders bevorzugt 120 bis 150 mg KOH/g.

Sofern nicht anders angegeben, wird in der vorliegenden Anmeldung die OH-Zahl titrimetrisch gemäss DIN 53240 bestimmt. Hierbei wird die Hydroxylzahl durch Acetylierung mit Essigsäureanhydrid und nachfolgender Titration des überschüssigen Essigsäureanhydrids mit alkoholischer Kalilauge bestimmt. Vorteilhaft weist das Polyacrylatpolylol **PA** einen Hydroxylgruppengehalt von 2 bis 6, besonders bevorzugt von 3 bis 5, auf.

Vorteilhaft weist das Polyacrylatpolylol **PA** einen OH-Äquivalenzgewicht von 300 - 800, insbesondere 400 - 700, besonders bevorzugt 500 - 600, auf.

Solche Polyacrylatpolylole **PA** lassen sich in an sich bekannter Weise durch Copolymerisation Hydroxylgruppen aufweisender olefinisch ungesättigter Monomerer mit hydroxylgruppenfreien olefinischen Monomeren herstellen.

Für die Herstellung der Polyacrylatpolylole **PA** werden unter anderem Isobornylmethacrylat und/oder Isobornylacrylat verwendet, insbesondere wird Isobornylmethacrylat verwendet.

Beispiele für weitere geeignete Monomere zur Herstellung der Polyacrylatpolylol **PA** sind Vinyl- bzw. Vinylidenmonomere wie z.B. Styrol, α-Methylstyrol, o- bzw. p-Chlorstyrol, o-, m- oder p- Methylstyrol, p-tert.-Butylstyrol, Acrylsäure, Acrylnitril, Methacrylnitril, Acryl- und Methacrylsäureester von Alkoholen mit bis zu 18 Kohlenstoffatomen, wie z. B. Methylacrylat, Ethyl- acrylat, n-Propylacrylat, Isopropylacrylat, n-Butylacrylat, Isobutylacrylat, tert-Butylacrylat, Amylacrylat, Hexylacrylat, 2-Ethylhexylacrylat, Isooctylacrylat, 3,3,5-Trimethylhexylacrylat, Stearylacrylat, Laurylacrylat, Cyclopentylacrylat, Cyclohexylacrylat, 4-tert.-Butylcyclohexyl- acrylat, Methylmethacrylat, Ethylmethacrylat, n-Propylmethacrylat, Isopropylmethacrylat, Butylmethacrylat, Isobutylmethacrylat, tert-Butylmethacrylat, Amylmethacryl- at, Hexylmethacrylat, 2-Ethylhexylmethacrylat, Isooctylmethacrylat, 3,3,5-Trimethylhexyl- methacrylat, Stearylmethacrylat, Laurylmethacrylat, Cyclopentylmethacrylat, Cyclohexylmethacrylat, 4-tert.-Butycyclohexylmethacrylat, Diester der Fumarsäure, Itaconsäure oder Maleinsäure mit 4 bis 8 Kohlenstoffatome aufweisenden Alkoholen, Acrylsäureamid, Methacrylsäureamid, Vinylester von Alkanmonocarbonsäuren mit 2 bis 5 Kohlenstoffatomen, wie z. B. Vinylacetat oder Vinylpropionat, Hydroxyalkylester der Acrylsäure oder Methacrylsäure mit 2 bis 5 Kohlenstoffatomen im Hydroxyalkylrest, wie z. B. 2-Hydroxyethyl-, 2-Hydroxypropyl-, 3-Hydroxypropyl-, 3-Hydroxy- butyl-, 4-Hydroxybutyl-, Trimethylolpropanmono- oder Pentaerythritmonoacrylat oder -meth- acrylat, sowie beliebige Gemische solcher beispielhaft genannter Monomere.

Vorzugsweise sind weitere Monomere zur Herstellung der Polyacrylatpolylole **PA** ausgewählt aus der Gruppe bestehend aus Styrol, 2-Hydroxyethyl(meth)acrylat, 2-Hydroxypropyl(meth)acrylat, 3-Hydroxypropyl(meth)acrylat, 3-Hydroxy- butyl(meth)acrylat, 4-Hydroxybutyl(meth)acrylat, Trimethylolpropanmono(meth)acrylat und Pentaerythritmono(meth)acrylat .

Besonders bevorzugt sind weitere Monomere zur Herstellung der Polyacrylatpolylole **PA** ausgewählt aus der Gruppe bestehend aus Styrol und 2-Hydroxyethyl(meth)acrylat, insbesondere Styrol und 2-Hydroxyethylmethacrylat.

Am meisten bevorzugt handelt es sich um ein Polyacrylatpolylol **PA,** welches basierend ist auf Isobornylmethacrylat, Stryrol und 2-Hydroxyethylmethacrylat, insbesondere basiert es ausschliesslich auf den vorgenannten Monomeren.

Vorzugsweise ist das Polyacrylatpolylol **PA** frei von Silangruppen.

Die Zusammensetzung weist in der ersten Komponente mindestens ein Polyesterpolyol **PE** mit einer OH-Zahl zwischen 10 - 500 mg KOH/g, auf.

Die Polyesterpolyole **PE** basieren vorzugsweise jeweils auf mindestens einer aliphatischen oder aromatischen Dicarbonsäureeinheit sowie mindestens einem tri- oder mehrfunktionellen Alkohol. Sie können darüber hinaus weitere Bausteine umfassen.

Unter "mindestens trifunktionelle Alkohole" werden Alkohole mit mindestens drei Alkoholgruppen verstanden. Als mindestens trifunktioneller Alkohol sind Glycerin, Trimethylolethan, Trimethylolpropan, Bis(trimethylolpropan), Pentaerythrit, oder ein alkoxyliertes (bevorzugt ethoxylier-tes oder propoxyliertes) Derivat davon geeignet. Selbstverständlich können auch Gemische mehrerer verschiedener mindestens trifunktioneller Alkohole eingesetzt werden. Bevorzugt als mindestens trifunktionelle Alkohole sind Glycerin, Trimethylolpropan und Pentaerythrit. Ganz besonders bevorzugt sind Glycerin und Trimethylolpropan, insbesondere Trimethylolpropan.

Das Polyesterpolyol **PE** basiert bevorzugt auf einer aliphatischen oder aromatischen Dicarbonsäure, die insbesondere eine aliphatische oder aromatische C3-C16 Dicarbonsäure ist, vorzugsweise handelt es sich um eine aliphatische Dicarbonsäure.

Vorzugsweise handelt es sich um eine C4-C12 Dicarbonsäure, C4-C10 Dicarbonsäure, insbesondere um eine C5-C8, am meisten bevorzugt um eine C6 Dicarbonsäure.

Am meisten bevorzugt handelt es sich um 1 ,2-, 1 ,3- oder 1 ,4-Cyclohexandicarbonsäure, insbesondere 1 ,2-Cyclohexandicarbonsäure.

Besonders bevorzugt basiert das Polyesterpolyol **PE** auf einer aliphatischen C4-C12 Dicarbonsäure und mindestens trifunktionellen Alkoholen ausgewählt aus der Liste bestehend aus Glycerin, Trimethylolpropan und Pentaerythrit. Am meisten bevorzugt basiert das Polyesterpolyol **PE** auf 1 ,2-Cyclohexandicarbonsäure und Trimethylolpropan.

Die Polyesterpolyole **PE** weisen OH-Zahlen zwischen 10 mg/KOH g bis 500 mg KOH/g, bevorzugt im Bereich von 50 mg KOH/g bis 400 mg KOH/g, 100 mg KOH/g bis 350 mg KOH/g, und ganz besonders bevorzugt 200 bis 300 mg KOH/g, insbesondere 250 bis 300 mg KOH/g.

Die Zahl freier COOH-Gruppen (Säurezahl) der Polyesterpolyole **PE** beträgt bevorzugt 25 bis 200, ganz besonders bevorzugt 50 bis 150, 75 bis 100 und insbesondere 80 bis 90 KOH pro Gramm Polymer und kann durch Titration nach DIN 53402 bestimmt werden.

Weiter enthalten das mindestens eine Polyacrylatpolylol PA und das mindestens eine Polyesterpolyol PE zusammen mehr als 99 Gewichts-%,
der NCO-reaktiven Gruppen, insbesondere der OH-Gruppen, der ersten Komponente enthalten, bezogen auf das Gesamtgewicht der ersten Komponente.

Das Polyacrylatpolylol **PA** und der Polyesterpolyol **PE** sind in einer solchen Menge vorhanden, dass das Gewichtsverhältnis **PA/PE** im Bereich von 1.75 bis 30, liegt. Vorzugsweise liegt das Gewichtsverhältnis **PA/PE** im Bereich von 2.5 bis 20, 2.5 bis 15, 3.75 bis 10, 4.5 bis 7.5, insbesondere 5 bis 7.

Ein solches Gewichtsverhältnis ist dahingehend von Vorteil, dass dadurch eine schnelle Trocknungszeit, eine vorteilhafte Gelierzeit und eine hohe Pendelhärte erreicht werden. Dies ist beispielsweise aus dem Vergleich der Versuche Ref. 10, Ex.4-Ex.6 in Tabelle 2 ersichtlich.

Hohe Werte in dem erwähnten Gewichtsverhältnis sind bezüglich einer kurzen Trocknungszeit vorteilhaft, wobei tiefe Gewichtsverhältnisse bezüglich hohen Werten in der Pendelhärte und längerer Gelierzeit vorteilhaft sind.

Die zweite Komponente der Zusammensetzung enthält ein aliphatisches Polyisocyanat **B1.**

Als "aliphatisches Isocyanat" wird ein Isocyanat bezeichnet, dessen Isocyanatgruppen direkt an ein aliphatisches C-Atom gebunden sind. Dementsprechend werden solche Isocyanatgruppen als "aliphatische Isocyanatgruppen" bezeichnet.

Geeignete aliphatische Polyisocyanate **B1** sind insbesondere monomere Di- oder Triisocyanaten, sowie Oligomere, Polymere und Derivate von monomeren Di- oder Triisocyanate, sowie beliebige Mischungen davon.

Als aliphatische monomere Polyisocyanate **B1** bevorzugt sind aliphatische oder cycloaliphatische Diisocyanate, insbesondere HDI, TMDI, Cyclohexan-1,3- oder -1,4-diisocyanat, IPDI, H₁₂MDI, 1,3- oder 1,4-Bis-(isocyanatomethyl)cyclohexan und XDI.

Ein besonders bevorzugtes monomeres Polyisocyanat **B1** ist HDI, IPDI oder H₁₂MDI. Am meisten bevorzugt ist HDI oder IPDI, insbesondere HDI.

Geeignete Oligomere, Polymere und Derivate der genannten monomeren Di- und Triisocyanate sind insbesondere abgeleitet von HDI oder IPDI, insbesondere HDI. Davon insbesondere geeignet sind kommerziell erhältliche Typen, beispielsweise
Desmodur^{®} N 75, Desmodur^{®} N 3600 und Desmodur^{®} N 3900 (alle von Bayer). Vorzugsweise weisen sie einen NCO-Gehalt von 16 bis 20 Gewichts-% auf, vorzugsweise 16 bis 18 Gewichts-%.

Als aliphatische monomere Polyisocyanate **B1** besonders bevorzugt sind Oligomere, Polymere und Derivate der abgeleitet von HDI oder IPDI, insbesondere HDI. Vorzugsweise weisen sie einen NCO-Gehalt von 16 bis 20 Gewichts-% auf, vorzugsweise 16 bis 18 Gewichts-%.

Diese sind dahingehend von Vorteil, dass dadurch eine kurze Trocknungszeit bei gleichzeitiger hoher Pendelhärte erhalten wird. Dies ist beispielsweise in den Tabellen 1 und 2 im Vergleich von Ex.1 mit Ex.2 und Ex.3 ersichtlich.

Es ist weiter vorteilhaft, wenn die Summe der NCO-Gruppen, welche nicht von **B1** herrühren, ≤20%, insbesondere ≤10%, insbesondere bevorzugt ≤5%, am meisten bevorzugt ≤1%, beträgt, bezogen auf die Summe aller NCO -Gruppen der zweikomponentigen Polyurethanzusammensetzung.

Vorzugsweise beträgt der Anteil des aliphatischen Polyisocyanats **B1** ≥ 90 Gew.-%, insbesondere ≥ 95 Gew.-%, insbesondere bevorzugt ≥99 Gew.-%, bezogen auf das Gesamtgewicht der zweiten Komponente.

Bevorzugt enthält die Zusammensetzung zusätzlich einen oder mehrere weitere Bestandteile, welche insbesondere ausgewählt sind aus Katalysatoren, Füllstoffen und Lösemitteln.

Geeignete Katalysatoren sind weiterhin Katalysatoren für die Beschleunigung der Reaktion von Isocyanatgruppen, insbesondere Organozinn(IV)-Verbindungen wie insbesondere Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat oder Dioctylzinndiacetylacetonat, Komplexverbindungen von Bismut(III) oder Zirkonium(IV), insbesondere mit Liganden ausgewählt aus Alkoholaten, Carboxylaten, 1,3-Diketonaten, Oxinat, 1,3-Ketoesteraten und 1,3-Ketoamidaten, oder tertiäre Aminogruppen enthaltende Verbindungen wie insbesondere 2,2'-Dimorpholinodiethylether (DMDEE).

Geeignete Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, Zemente, Gipse, Flugaschen, industriell hergestellte Russe, Graphit, Metall-Pulver, beispielsweise von Aluminium, Kupfer, Eisen, Silber oder Stahl, PVC-Pulver oder Hohlkugeln.

Vorzugsweise beträgt der Anteil an Füllstoffen 15 - 45 Gew.-%, 25 - 45 Gew.%, insbesondere 30 - 40 Gew.-%, bezogen auf das Gesamtgewicht der Zusammensetzung.

Geeignete Lösemittel sind insbesondere Lösemittel ausgewählt aus der Liste bestehend aus Aceton, Methylethylketon, Methyl-n-propylketon, Diisobutylketon, Methylisobutylketon, Methyl-n-amylketon, Methylisoamylketon, Acetylaceton, Mesityloxid, Cyclohexanon, Methylcyclohexanon, Ethylacetat, Propylacetat, Butylacetat, Pentylacetat, n-Butylpropionat, Diethylmalonat, 1-Methoxy-2-propylacetat, Ethyl-3-ethoxypropionat, Diisopropylether, Diethylether, Dibutylether, Diethylenglykoldiethylether, Ethylenglykoldiethylether, Ethylenglykolmonopropylether, Ethylenglykolmono-2-ethylhexylether, Acetale wie insbesondere Methylal, Ethylal, Propylal, Butylal, 2-Ethylhexylal, Dioxolan, Glycerolformal oder 2,5,7,10-Tetraoxaundecan (TOU), Toluol, Xylol, Heptan, Octan, Naphtha, White Spirit, Petrolether, Benzin, Methylenchlorid, Propylencarbonat, Butyrolacton, N-Methylpyrrolidon und N-Ethylpyrrolidon.

Der Anteil an Lösungsmittel betragt 2-20 Gew.-%, bevorzugt 5-15 Gew.-%, insbesondere bevorzugt 7.5 - 12.5 Gew.-% bezogen auf das Gesamtgewicht der Zusammensetzung. Dies ist aufgrund des Umwelt- und Gesundheitsschutzes vorteilhaft, da die Zusammensetzungen dadurch geringe VOC-Emissionen aufweisen.

Falls die Zusammensetzung Weichmacher aufweist beträgt der Anteil an Weichmachern vorzugsweise weniger als 5 Gew.-%, weniger als 2 Gew.-%, weniger als 1 Gew.-%, weniger als 0.5 Gew.-%, weniger als 0.1 Gew.-%, bezogen auf das Gesamtgewicht der Zusammensetzung. Solche Weichmacher sind insbesondere Carbonsäureester wie Phthalate, insbesondere Diisononylphthalat (DINP), Diisodecylphthalat (DIDP) oder Di(2-propylheptyl)phthalat (DPHP), hydrierte Phthalate, insbesondere hydriertes Diisononylphthalat bzw. Diisononylcyclohexan-1,2-dicarboxylat (DINCH), Terephthalate, insbesondere Dioctylterephthalat, Trimellitate, Adipate, insbesondere Dioctyladipat, Azelate, Sebacate, Benzoate, Glykolether, Glykolester, organische Phosphor- oder Sulfonsäureester, Polybutene, Polyisobutene oder von natürlichen Fetten oder Ölen abgeleitete Weichmacher, insbesondere epoxidiertes Soja- oder Leinöl.

Die Zusammensetzung kann weitere für Polyurethanzusammensetzungen gebräuchliche Zusätze enthalten. Insbesondere können die folgenden Hilfs- und Zusatzstoffe vorhanden sein:
- anorganische oder organische Pigmente, insbesondere Titandioxid, Chromoxide oder Eisenoxide;
- Fasern;
- Farbstoffe;
- Trocknungsmittel;
- Haftvermittler;
- latente Härter oder Vernetzer;
- Rheologie-Modifizierer;
- flammhemmende Substanzen;
- Additive, insbesondere Netzmittel, Verlaufmittel, Entschäumer, Entlüfter, Stabilisatoren gegen Oxidation, Wärme, Licht oder UV-Strahlung oder Biozide;
oder weitere üblicherweise in solchen Zusammensetzungen eingesetzte Substanzen.

Das Verhältnis der Isocyanatgruppen gegenüber den zu Isocyanatgruppen reaktiven Gruppen, insbesondere Hydroxylgruppen, liegt in der Zusammensetzung geeigneterweise im Bereich von 0.8 bis 1.2, bevorzugt im Bereich von 0.9 bis 1.1, besonders bevorzugt im Bereich von 0.95 bis 1.05.

Die erste Komponente der Zusammensetzung weist bevorzugt eine Viskosität bei 23 °C im Bereich von 1 bis 10 Pa·s, 2 bis 9 Pa·s, 3 bis 8 Pa·s, bevorzugt 4 bis 6 Pa·s, auf.

Die erste und die zweite Komponente der Zusammensetzung werden getrennt voneinander hergestellt. Dabei werden die Bestandteile der jeweiligen Komponente unter Ausschluss von Feuchtigkeit miteinander vermischt, so dass eine makroskopisch homogene Flüssigkeit entsteht. Jede Komponente wird in einem separaten feuchtigkeitsdichten Gebinde gelagert. Ein geeignetes Gebinde ist insbesondere ein Fass, ein Container, ein Hobbock, ein Eimer, eine Büchse, ein Beutel, ein Kanister oder eine Flasche. Die Komponenten sind lagerstabil, das heisst, dass sie vor ihrer Anwendung während mehreren Monaten bis zu einem Jahr und länger im jeweiligen Gebinde aufbewahrt werden können, ohne dass sich ihre Eigenschaften in einem für ihren Gebrauch relevanten Ausmass verändern.

Zur Anwendung der Zusammensetzung werden die beiden Komponenten kurz vor oder während der Applikation miteinander vermischt. Das Mischungsverhältnis wird bevorzugt so gewählt, dass die gegenüber Isocyanaten reaktiven Gruppen in einem geeigneten Verhältnis zu den Isocyanatgruppen stehen, wie vorgängig beschrieben. In Gewichtsteilen liegt das Mischungsverhältnis zwischen der ersten und der zweiten Komponente typischerweise im Bereich von etwa 1:1 bis 20:1, insbesondere 2:1 bis 10:1.

Das Vermischen der beiden Komponenten erfolgt mittels eines geeigneten Rührwerkes, beispielsweise eines Doppelwellenmischers, wobei die einzelnen Komponenten geeigneterweise im richtigen Mischungsverhältnis vorkonfektioniert sind. Ebenfalls möglich ist eine koninuierliche maschinelle Verarbeitung mittels einer Zweikomponenten-Dosieranlage mit statischer oder dynamischer Vermischung der Komponenten. Beim Mischen ist darauf zu achten, dass die zwei Komponenten möglichst homogen vermischt werden. Wird vor der Applikation vermischt, so muss darauf geachtet werden, dass zwischen dem Vermischen der Komponenten und der Applikation nicht zu viel Zeit vergeht, da es dadurch zu Störungen, wie beispielsweise einem schlechten Verlauf oder einem verlangsamten oder unvollständigen Aufbau der Haftung zum Substrat, kommen kann. Das Vermischen erfolgt insbesondere bei Umgebungstemperatur, welche typischerweise im Bereich von etwa 5 bis 50 °C, bevorzugt bei etwa 10 bis 35 °C, liegt.

Mit dem Vermischen der beiden Komponenten beginnt die Aushärtung durch chemische Reaktion. Dabei reagieren vorhandene Hydroxylgruppen mit vorhandenen Isocyanatgruppen. Als Resultat dieser Reaktionen härtet die Zusammensetzung zu einem festen Material aus. Dieser Vorgang wird auch als Vernetzung bezeichnet.

Weiterhin offenbart ist eine ausgehärtete Zusammensetzung, erhalten aus einer Zusammensetzung, wie sie vorhergehend beschrieben worden ist, nach dem Vermischen der beiden Komponenten und deren Aushärtung.

Bevorzugt weist die Zusammensetzung eine Minute nach dem Vermischen der beiden Komponenten eine Viskosität bei 23 °C im Bereich von 0.5 bis 15 Pa·s, vorzugsweise 0.5 bis 10 Pa·s, insbesondere bevorzugt 1 bis 5 Pa·s, auf.

Bei der Applikation kann die frisch vermischte, noch flüssige Zusammensetzung innerhalb ihrer Gelierzeit als Beschichtung auf eine ebene oder leicht geneigte Fläche appliziert werden. Vorzugsweise wird die Zusammensetzung durch Spritzen appliziert, vorzugsweise mit einem Spritzdruck von mehr als 50 bar, insbesondere mehr als 100 bar. Sie kann jedoch auch appliziert werden, indem sie auf ein Substrat gegossen und anschliessend flächig bis zur erwünschten Schichtdicke verteilt wird, beispielsweise mittels einer Rolle, einer Bürste oder einem Pinsel.

In einem weiteren Aspekt betrifft die vorliegende Erfindung ein Verfahren zur Applikation der vorgehend genannten gemischten Zusammensetzung innerhalb ihrer Gelierzeit als Beschichtung auf ein Substrat. Vorzugsweise handelt es sich um die nachfolgend als bevorzugt aufgeführte Substrate

Vorzugsweise wird dabei eine Beschichtung mit einer Schichtdicke im Bereich von 40 bis 250 µm, 60 bis 150 µm, insbesondere 80 bis 100 µm, erhalten.

Die Zusammensetzung wird vorzugsweise auf einen Epoxidharz-basierten Primer aufgebracht. Der Primer wird üblicherweise so appliziert, dass nach dem Applizieren eine Primerschicht in einer Schichtdicke im Bereich von 80 bis 500 µm, insbesondere 100 bis 300 µm, auf dem Substrat verbleibt. Er wird typischerweise dazu verwendet, die Haftung zwischen einem Substrat und einer Schutzbeschichtung zu verbessern.

Geeignete Substrate, welche mit der Zusammensetzung beschichtet werden können, sind insbesondere Metalle oder Legierungen wie Aluminium, Kupfer, Eisen, Stahl, Buntmetalle, inklusive oberflächenveredelte Metalle oder Legierungen wie verzinkte oder verchromte Metalle. Besonders bevorzugt handelt es sich um Stahl.

Vorzugsweise handelt es sich bei den vorgenannten Metallen oder Legierungen um atmosphärisch belastete Substrate.

Unter dem Begriff "atmosphärisch belastet" werden vorzugsweise Objekte verstanden, welche durch Luftverunreinigungen und die Witterung belastet werden.

Vorzugsweise handelt es sich bei den vorgehend erwähnten Substraten um Objekten ausgewählt aus der Liste bestehend aus Brücken, Rohrleitungen, Industrie- und Hafenanlagen, Tanks, Windkraftanlagen und Kläranlagen, insbesondere Windkraftanlagen.

Die Substrate können bei Bedarf vor dem Applizieren vorbehandelt werden, insbesondere durch physikalische und/oder chemische Reinigungsverfahren.

Besonders bevorzugt weisen die vorgehend genannten Substrate einen Primer auf ihrer Oberfläche auf, insbesondere einen vorgehend genannten Epoxidharz-basierten Primer.

In einem weiteren Aspekt der Erfindung handelt es sich daher um die Verwendung der erfindungsgemässen Zusammensetzung als Beschichtung, insbesondere zum Schutz der vorgehend genannten Substrate und Objekte.

Vorzugsweise handelt es sich um eine Verwendung in einem Beschichtungssystem, umfassend
- vorzugsweise einen Primer, insbesondere einen Epoxidharz-basierten Primer, und
- mindestens eine Schicht der vorgehend beschriebenen Zusammensetzung.

Es ist weiter bevorzugt, wenn der Primer eine Schichtdicke im Bereich von 80 bis 500 µm, insbesondere 100 bis 300 µm aufweist.

Weiter ist es vorteilhaft, wenn die Zusammensetzung eine Schichtdicke im Bereich von 40 bis 250 µm, 60 bis 150 µm, insbesondere 80 bis 100 µm, aufweist.

Aus dem vorgehend genannten Verfahren oder aus der Applikation und Aushärtung der Zusammensetzung wird ein Artikel erhalten. Vorzugsweise handelt es sich um ein vorgehend genanntes Objekt ausgewählt aus der Liste bestehend aus Brücken, Rohrleitungen, Industrie- und Hafenanlagen, Tanks, Windkraftanlagen und Kläranlagen, insbesondere Windkraftanlagen.

Die erfindungsgemässe Zusammensetzung weist vorteilhafte Eigenschaften auf:
Trockengrad (wie im Beispielteil beschrieben); < 4 h, vorzugsweise ≤ 3h, insbesondere ≤ 2.5 h, besonders bevorzugt ≤ 2 h, sowie ≥ 1.5h, vorzugsweise ≥ 1.75h.
Gelierzeit bei 23°C gemäss DIN 16 945; 60 - 180 min, vorzugsweise 80 - 140 min, insbesondere 90 - 120 min
Pendelhärte (wie im Beispielteil beschrieben); ≥ 30, vorzugsweise ≥ 35, ≥ 40, insbesondere >40.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### 1. Verwendete kommerzielle Substanzen:

| | |
|---|---|
| Macrynal VSM 2805, Polyacrylat 1 | Hydroxy-funktionelles Polyacrylat, OH-Zahl 135 - 150 mgKOH/g, OH-Äquivalenzgewicht 480, Feststoffgehalt 80 % in Butylacetat (von Allnex) |
| Joncryl 507, Polyacrylat 2 | Hydroxy-funktionelles Polyacrylat basierend auf 2-Ethylhexylacrylat, Styrol und 2-Hydroxyethylmethacrylat, OH-Zahl 140 mg KOH/g, OH- |
| | Äquivalenzgewicht 400, Feststoffgehalt 80 % in n-Butylacetat (von BASF) |
| Synthalat A-TS 3737, Polyacrylat 3 | Hydroxy-funktionelles Polyacrylat, OH-Zahl 90 - 100 mg KOH/g, Hydroxylgruppengehalt 3 Gew.-%, Feststoffgehalt 70 % (von Synthopol) |
| PA | Hydroxy-funktionelles Polyacrylat basierend auf |
| | Isobornylmethacrylat, Styrol und 2-Hydroxyethylmethacrylat, OH-Zahl 135 mg KOH/g, Hydroxylgruppengehalt 4.1 Gew.-%, OH-Äquivalenzgewicht 550, mittleres Molekulargewicht 2000 - 4000 g/mol, Feststoffgehalt 75 % in Butylacetat |
| PE | Basonol HPE 1170 B, basierend auf Trimethylolpropan und 1,2-Cyclohexandicarbonsäure, OH-Zahl 275 mg KOH/g, Säurezahl 85 KOH pro Gramm Polymer (DIN 53402) (von BASF) |
| Katalysator | Dibutylzinndilaurat (von Sigma Aldrich) |
| Lösungsmittel | Mischung aus Butylacetat, Sek-Butanol und Methoxypropylacetat |
| Dispergieradditiv | - |
| Farbpigment | Titandioxid |
| CaCO₃ | Füller |
| Schwerspat | Füller |
| Desmodur^{®} N 75 BA/X, B1A | Homopolymer von Hexamethylene Diisocyanate (HDI); NCO-Gehalt 16.2 - 16.8 Gewichts-% (von Bayer MaterialScience) |
| Desmodur^{®} N 3600, B1B | Trimer von Hexamethylene Diisocyanate (HDI); NCO-Gehalt 22.5 - 23.5 Gewichts-% (von Bayer MaterialScience) |
| Desmodur^{®} N 3900, B1C | Trimer von Hexamethylene Diisocyanate (HDI); NCO-Gehalt 22 - 23 Gewichts-% (von Bayer MaterialScience) |

### 2. Herstellung von Polyurethan-Zusammensetzungen

Für jede Zusammensetzung wurden die in den Tabellen 1 und 2 angegebenen Inhaltsstoffe in den angegebenen Mengen (in Gewichtsteilen) der ersten Komponente ("Komponente-1") zu einer homogenen Flüssigkeit verarbeitet und aufbewahrt. Anschliessend wurde die in den Tabellen 1 und 2 angegebenen Menge der zweiten Komponente zur ersten Komponente gegeben und die beiden Komponenten zu einer homogenen Flüssigkeit verarbeitet und diese unverzüglich folgendermassen geprüft:
Die Viskosität wurde mit einem Rheometer Physica MCR 301 Platte-Platte Rheometer bei 23°C, mit einem Messspalt von 0,5 mm gemäss DIN 53019-1 gemessen.
Die Gelierzeit bei 23°C (min) wurde bestimmt gemäss DIN 16 945.
Der Trockengrad TG 6 bei 80µm TFD RT wurde gemäss DIN EN ISO 9117-5 bei 23°C und 50 % rel. Luftfeuchte bestimmt.
Die Pendelhärte TG 6 bei 80µm TFD wurde bestimmt durch Beurteilung des mechanischen Dämpfungsverhaltens von Beschichtungen mit einem Pendelgerät nach König gemäss der DIN EN ISO 1522.

Die Resultate sind in den Tabellen 1 bis 2 angegeben.

Das Verhältnis der Isocyanatgruppen gegenüber den Hydroxylgruppen ist als "NCO/OH" ausgewiesen.

Bei den Zusammensetzungen *Ex.1* bis Ex.6 handelt es sich um erfindungsgemässe Beispiele. Bei den Zusammensetzungen Ref-1 bis *Ref-10* handelt es sich um Vergleichsbeispiele.

**Tabelle 1, * Feststoffgehalt in %, ** Gewichtsverhältnis Polyacrylatpolylol PA zu Polyesterpolyol PE**

| **Komponente-1** | Ref.1 | Ref.2 | Ref.3 | Ex.1 | Ref.4 | Ref.5 | Ref.6 | Ex.2 |
|---|---|---|---|---|---|---|---|---|
| Polyacrylat 1 (80%*) | 24 | | | | 24 | | | |
| Polyacrylat 2 (80%*) | | 24 | | | | 24 | | |
| Polyacrylat 3 (70%*) | | | 24 | | | | 24 | |
| Polyacrylatpolyol PA (75%*) | | | | 24 | | | | 24 |
| Polyester PE | 4.8 | 4.8 | 4.8 | 4.8 | 4.8 | 4.8 | 4.8 | 4.8 |
| Dispergieradditiv | 1 | 1 | 1 | 1 | 1 | 1 | 1 | 1 |
| Katalysator | 0.2 | 0.2 | 0.2 | 0.2 | 0.2 | 0.2 | 0.2 | 0.2 |
| Lösungsmittel | 11.8 | 11.8 | 11.8 | 11.8 | 11.8 | 11.8 | 11.8 | 11.8 |
| Farbpigment | 7.5 | 7.5 | 7.5 | 7.5 | 7.5 | 7.5 | 7.5 | 7.5 |
| CaCO₃ | 35.4 | 35.4 | 35.4 | 35.4 | 35.4 | 35.4 | 35.4 | 35.4 |
| Schwerspat | 15.3 | 15.3 | 15.3 | 15.3 | 15.3 | 15.3 | 15.3 | 15.3 |
| Summe | 100 | 100 | 100 | 100 | 100 | 100 | 100 | 100 |
| PA/PE** | 5.7 | 5.7 | 5.7 | 5.4 | 5.7 | 5.7 | 5.7 | 5.0 |

| **Komponente-2** | | | | | | | | |
|---|---|---|---|---|---|---|---|---|
| B1A | 16,7 | 16,5 | 11,8 | 15,4 | | | | |
| B1B | | | | | 12 | 11,8 | 8,5 | 11 |
| B1C | | | | | | | | |
| Viskosität | 2.6 | 2 | 2.7 | 1.9 | 3.1 | 2.7 | 3.3 | 2.5 |
| NCO:OH | 1:1 | 1:1 | 1:1 | 1:1 | 1:1 | 1:1 | 1:1 | 1:1 |
| Trockengrad | 6h | 4h | 8h | 2h | 7h | 5h | 8h | 2h 30min |
| Gelierzeit bei 23 °C (min) | 240 | 120 | 360 | 120 | 300 | 150 | 380 | 140 |
| Pendelhärte | 30 | 40 | 30 | 40 | 30 | 35 | 25 | 30 |

**Tabelle 2, * Feststoffgehalt in %, ** Gewichtsverhältnis Polyacrylatpolylol PA zu Polyesterpolyol PE**

| **Komponente-1** | Ref.7 | Ref.8 | Ref.9 | Ex.3 | Ref.10 | Ex.4 | Ex.5 | Ex.6 |
|---|---|---|---|---|---|---|---|---|
| Polyacrylat 1 (80%*) | 24 | | | | | | | |
| Polyacrylat 2 (80%*) | | 24 | | | | | | |
| Polyacrylat 3 (70%*) | | | 24 | | | | | |
| Polyacrylatpolyol PA (75%*) | | | | 24 | 33.7 | 31.2 | 28.7 | 23.7 |
| Polyester PE | 4.8 | 4.8 | 4.8 | 4.8 | 0 | 2.5 | 5 | 10 |
| Dispergieradditiv | 1 | 1 | 1 | 1 | 1 | 1 | 1 | 1 |
| Katalysator | 0.2 | 0.2 | 0.2 | 0.2 | 0.2 | 0.2 | 0.2 | 0.2 |
| Lösungsmittel | 11.8 | 11.8 | 11.8 | 11.8 | 11.8 | 11.8 | 11.8 | 11.8 |
| Farbpigment | 7.5 | 7.5 | 7.5 | 7.5 | 7.5 | 7.5 | 7.5 | 7.5 |
| CaCO₃ | 35.4 | 35.4 | 35.4 | 35.4 | 30.5 | 30.5 | 30.5 | 30.5 |
| Schwerspat | 15.3 | 15.3 | 15.3 | 15.3 | 15.3 | 15.3 | 15.3 | 15.3 |
| Summe | 100 | 100 | 100 | 100 | 100 | 100 | 100 | 100 |
| PA/PE** | 5.7 | 5.7 | 5 | 5.4 | - | 13.4 | 6.2 | 2.5 |

| **Komponente-2** | | | | | | | | |
|---|---|---|---|---|---|---|---|---|
| B1A | | | | | 15,5 | 16,6 | 17,7 | 19,86 |
| B1B | | | | | | | | |
| B1C | 11,7 | 11,6 | 8,3 | 10,8 | | | | |
| Viskosität | 2.9 | 2.3 | 3 | 2.1 | 2.59 | 2.23 | 2.2 | 2.46 |
| NCO:OH | 1:1 | 1:1 | 1:1 | 1:1 | 1:1 | 1:1 | 1:1 | 1:1 |
| Trockengrad | 7h | 5h | 8h | 3h | 1h 30min | 1h 50min | 2h | 2h 30min |
| Gelierzeit bei 23 °C (min) | 300 | 160 | 370 | 160 | 40 | 80 | 120 | 180 |
| Pendelhärte | 25 | 30 | 25 | 30 | 40 | 30 | 40 | 50 |

## Patentansprüche

1. Zusammensetzung bestehend aus
einer ersten Komponente enthaltend
- mindestens ein Polyacrylatpolylol **PA,** welches basierend auf Isobornyl (Meth)acrylat ist,
- mindestens ein Polyesterpolyol **PE** mit einer OH-Zahl zwischen 10 - 500 mg KOH/g, wobei die OH-Zahl titrimetrisch gemäss DIN 53240 bestimmt wird,
und einer zweiten Komponente enthaltend ein aliphatisches Polyisocyanat B1;
wobei das Polyacrylatpolylol **PA** und der Polyesterpolyol **PE** in einer solchen Menge vorhanden sind, dass das Gewichtsverhältnis **PA/PE** im Bereich von 1.75 bis 30, liegt, und
wobei das mindestens eine Polyacrylatpolylol **PA** und das mindestens eine Polyesterpolyol PE zusammen mehr als 99 Gewichts-%, der NCO-reaktiven Gruppen, insbesondere der OH-Gruppen, der ersten Komponente enthalten, bezogen auf das Gesamtgewicht der ersten Komponente, und
**dadurch gekennzeichnet, dass** die Zusammensetzung einen Anteil an Lösungsmitteln von 2 - 20 Gew.-%, 5 - 15 Gew.-%, insbesondere 7.5 - 12.5 Gew.-%, bezogen auf das Gesamtgewicht der Zusammensetzung, enthält.

2. Zusammensetzung gemäss Anspruch 1, **dadurch gekennzeichnet, dass** das Polyacrylatpolylol **PA** ein mittleres Molekulargewicht im Bereich von 800 bis 10000 g/mol, 1000 bis 5000 g/mol, 1500 bis 4000 g/mol, vorzugsweise von 2000 bis 4000 g/mol, aufweist, wobei als mittleres Molekulargewicht das Zahlenmittle Mₙ einer oligomeren oder polymeren Mischung von Molekülen bezeichnet wird, welches mittels Gelpermeationschromatographie (GPC) gegen Polystyrol als Standard bestimmt wird..

3. Zusammensetzung gemäss einem der vorhergehenden Ansprüche, **dadurch gekennzeichnet, dass** das Polyacrylatpolylol **PA** eine OH-Zahl zwischen 80 mg KOH/g bis 200 mg KOH/g, bevorzugt im Bereich von 100 mg KOH/g bis 180 mg KOH/g, und ganz besonders bevorzugt 120 bis 150 mg KOH/g, aufweist, wobei die OH-Zahl titrimetrisch gemäss DIN 53240 bestimmt wird.

4. Zusammensetzung gemäss einem der vorhergehenden Ansprüche, **dadurch gekennzeichnet, dass** weitere Monomere zur Herstellung der Polyacrylatpolylole **PA** ausgewählt aus der Gruppe bestehend aus Styrol, 2-Hydroxyethyl(meth)acrylat, 2-Hydroxypropyl(meth)acrylat, 3-Hydroxypropyl(meth)acrylat, 3-Hydroxybutyl(meth)acrylat, 4-Hydroxybutyl(meth)acrylat, Trimethylolpropanmono(meth)acrylat und Pentaerythritmono(meth)acrylat, insbesondere basiert das Polyacrylatpolylol PA auf Isobornylmethacrylat, Stryrol und 2- Hydroxyethylmethacrylat.

5. Zusammensetzung gemäss einem der vorhergehenden Ansprüche, **dadurch gekennzeichnet, dass** das Polyesterpolyol **PE** auf mindestens einer aliphatischen oder aromatischen Dicarbonsäureeinheit sowie mindestens einem tri- oder mehrfunktionellen Alkohol basiert.

6. Zusammensetzung gemäss Anspruch 5, **dadurch gekennzeichnet, dass** das Polyesterpolyol **PE** auf einer aliphatischen C4-C12 Dicarbonsäure und mindestens trifunktionellen Alkoholen ausgewählt aus der Liste bestehend aus Glycerin, Trimethylolpropan und Pentaerythrit, bevorzugt basiert das Polyesterpolyol **PE** auf 1 ,2-Cyclohexandicarbonsäure und Trimethylolpropan.

7. Zusammensetzung gemäss einem der vorhergehenden Ansprüche, **dadurch gekennzeichnet, dass** das Polyesterpolyol **PE** eine OH-Zahl im Bereich von 50 mg KOH/g bis 400 mg KOH/g, 100 mg KOH/g bis 350 mg KOH/g, und ganz besonders bevorzugt 200 bis 300 mg KOH/g, insbesondere 250 bis 300 mg KOH/g, aufweisen.

8. Zusammensetzung gemäss einem der vorhergehenden Ansprüche, **dadurch gekennzeichnet, dass** das Polyacrylatpolylol **PA** und der Polyesterpolyol **PE** in einer solchen Menge vorhanden sind, dass das Gewichtsverhältnis **PA/PE** im Bereich von 2.5 bis 20, 2.5 bis 15, 3.75 bis 10, 4.5 bis 7.5, insbesondere 5 bis 7, liegt.

9. Verwendung einer Zusammensetzung gemäss einem der Ansprüche 1 bis 8 als Beschichtung.

10. Verwendung gemäss Anspruch 9 in einem Beschichtungssystem, umfassend
- vorzugsweise einen Primer, insbesondere einen Epoxidharz-basierten Primer, vorzugsweise mit einer Schichtdicke im Bereich von 80 bis 500 µm, insbesondere 100 bis 300 µm, und
- mindestens eine Schicht der in den Ansprüchen 1 bis 8 beschriebenen Zusammensetzung, vorzugsweise mit einer Schichtdicke im Bereich von 40 bis 250 µm, 60 bis 150 µm, insbesondere 80 bis 100 µm.

11. Verfahren umfassen den Schritt der Applikation einer Zusammensetzung gemäss einem der Ansprüche 1 bis 11 innerhalb ihrer Gelierzeit als Beschichtung auf ein Substrat, wobei die Gelierzeit nach DIN 16 945 bestimmt wird.

## Claims

1. Composition consisting of
a first component containing
- at least one polyacrylate polylol **PA** which is based on isobornyl (meth)acrylate,
- at least one polyester polyol **PE** which has an OH number between 10 - 500 mg KOH/g, the OH number being determined titrimetrically according to DIN 53240,
and a second component containing an aliphatic polyisocyanate B1;
the polyacrylate polylol **PA** and the polyester polyol **PE** being present in such an amount that the weight ratio **PA/PE** is in the range of 1.75 to 30, and
the at least one polyacrylate polylol **PA** and the at least one polyester polyol PE together containing more than 99 wt.% of the NCO-reactive groups, in particular the OH groups, of the first component based on the total weight of the first component, and
**characterized in that** the composition contains a proportion of solvents of 2 - 20 wt.%, 5 - 15 wt.%, in particular 7.5 - 12.5 wt.%, based on the total weight of the composition.

2. Composition according to claim 1, **characterized in that** the polyacrylate polylol **PA** has an average molecular weight in the range from 800 to 10,000 g/mol, 1,000 to 5,000 g/mol, 1,500 to 4,000 g/mol, preferably from 2,000 to 4,000 g/mol, the average molecular weight being the number average Mₙ of an oligomeric or polymeric mixture of molecules, which number average is determined by means of gel permeation chromatography (GPC) against polystyrene as a standard.

3. Composition according to either of the preceding claims,
**characterized in that** the polyacrylate polylol **PA** has an OH number between 80 mg KOH/g to 200 mg KOH/g, preferably in the range from 100 mg KOH/g to 180 mg KOH/g, and very particularly preferably 120 to 150 mg KOH/g, the OH number being determined titrimetrically according to DIN 53240.

4. Composition according to any of the preceding claims,
**characterized in that** additional monomers for producing the polyacrylate polylols **PA** are selected from the group consisting of styrene, 2-hydroxyethyl (meth)acrylate, 2-hydroxypropyl (meth)acrylate, 3-hydroxypropyl (meth)acrylate, 3-hydroxybutyl (meth)acrylate, 4-hydroxybutyl (meth)acrylate, trimethylolpropane mono(meth)acrylate and pentaerythritol mono(meth)acrylate, in particular the polyacrylate polylol PA is based on isobornyl methacrylate, styrene and 2-hydroxyethyl methacrylate.

5. Composition according to any of the preceding claims,
**characterized in that** the polyester polyol **PE** is based on at least one aliphatic or aromatic dicarboxylic acid unit and at least one tri- or polyfunctional alcohol.

6. Composition according to claim 5, **characterized in that** the polyester polyol **PE** is based on an aliphatic C4-C12 dicarboxylic acid and at least trifunctional alcohols selected from the list consisting of glycerol, trimethylolpropane and pentaerythritol, preferably the polyester polyol **PE** is based on 1,2-cyclohexanedicarboxylic acid and trimethylolpropane.

7. Composition according to any of the preceding claims,
**characterized in that** the polyester polyol **PE** has an OH number in the range of 50 mg KOH/g to 400 mg KOH/g, 100 mg KOH/g to 350 mg KOH/g, and very particularly preferably 200 to 300 mg KOH/g, in particular 250 to 300 mg KOH/g.

8. Composition according to any of the preceding claims,
**characterized in that** the polyacrylate polylol **PA** and the polyester polyol **PE** are present in such an amount that the weight ratio **PA/PE** is in the range of 2.5 to 20, 2.5 to 15, 3.75 to 10, 4.5 to 7.5, in particular 5 to 7.

9. Use of a composition according to any of claims 1 to 8 as a coating.

10. Use according to claim 9 in a coating system comprising
- preferably a primer, in particular an epoxy-resin-based primer, preferably having a layer thickness in the range of 80 to 500 µm, in particular 100 to 300 µm, and
- at least one layer of the composition described in claims 1 to 8, preferably having a layer thickness in the range of 40 to 250 µm, 60 to 150 µm, in particular 80 to 100 µm.

11. Method comprising the step of applying a composition according to any of claims 1 to 11, within its gelling time, as a coating to a substrate, wherein the gelling time is determined according to DIN 16 945.

## Revendications

1. Composition comprenant
un premier composant contenant
- au moins un polyacrylate polyol **PA** qui est à base de (méth)acrylate d'isobornyle,
- au moins un polyester polyol **PE** comportant un indice d'hydroxyle compris entre 10 et 500 mg KOH/g, dans laquelle l'indice d'hydroxyle est déterminé par titrimétrie selon la norme DIN 53240,
et un second composant contenant un polyisocyanate aliphatique B1 ;
dans laquelle le polyacrylate polyol **PA** et le polyester polyol **PE** sont présents en une quantité telle que le rapport pondéral **PA/PE** se situe dans la plage allant de 1,75 à 30, et
dans laquelle l'au moins un polyacrylate polyol **PA** et l'au moins un polyester polyol PE contiennent ensemble plus de 99 % en poids des groupes réactifs avec les groupes NCO, en particulier des groupes OH, du premier composant, par rapport au poids total du premier composant, et
**caractérisée en ce que** la composition contient une proportion de solvants allant de 2 à 20 % en poids, de 5 à 15 % en poids, en particulier de 7,5 à 12,5 % en poids, par rapport au poids total de la composition.

2. Composition selon la revendication 1, **caractérisée en ce que** le polyacrylate polyol **PA** présente une masse moléculaire moyenne dans la plage allant de 800 à 10 000 g/mol, de 1000 à 5000 g/mol, de 1500 à 4000 g/mol, de préférence de 2000 à 4000 g/mol, dans laquelle la masse moléculaire moyenne désigne la moyenne en nombre Mₙ d'un mélange oligomère ou polymère de molécules qui est déterminée par chromatographie par perméation de gel (CPG) par rapport au polystyrène comme étalon.

3. Composition selon l'une des revendications précédentes,
**caractérisée en ce que** le polyacrylate polyol **PA** présente un indice d'hydroxyle compris entre 80 mg KOH/g à 200 mg KOH/g, de préférence dans la plage allant de 100 mg KOH/g à 180 mg KOH/g, et de manière particulièrement préférée de 120 à 150 mg KOH/g, dans laquelle l'indice d'hydroxyle est déterminé par titrimétrie selon la norme DIN 53240.

4. Composition selon l'une des revendications précédentes,
**caractérisée en ce que** d'autres monomères pour la préparation des polyacrylate polyols **PA** sont choisis dans le groupe constitué de styrène, (méth)acrylate de 2-hydroxyéthyle, (méth)acrylate de 2-hydroxypropyle, (méth)acrylate de 3-hydroxypropyle, (méth)acrylate de 3-hydroxybutyle, (méth)acrylate de 4-hydroxybutyle, mono(méth)acrylate de triméthylolpropane et mono(méth)acrylate de pentaérythritol, en particulier le polyacrylate polyol PA est basé sur le méthacrylate d'isobornyle, le styrène et le méthacrylate de 2-hydroxyéthyle.

5. Composition selon l'une des revendications précédentes,
**caractérisée en ce que** le polyester polyol **PE** est à base d'au moins un motif acide dicarboxylique aliphatique ou aromatique et d'au moins un alcool trifonctionnel ou polyfonctionnel.

6. Composition selon la revendication 5, **caractérisée en ce que** le polyester polyol **PE** est à base d'un acide dicarboxylique aliphatique en C4-C12 et d'au moins des alcools trifonctionnels choisis dans la liste constituée de glycérol, triméthylolpropane et pentaérythritol, de préférence le polyester polyol **PE** est à base d'acide 1,2-cyclohexanedicarboxylique et de triméthylolpropane.

7. Composition selon l'une des revendications précédentes,
**caractérisée en ce que** le polyester polyol **PE** présente un indice d'hydroxyle dans la plage allant de 50 mg KOH/g à 400 mg KOH/g, de 100 mg KOH/g à 350 mg KOH/g, et de manière particulièrement préférée de 200 à 300 mg KOH/g, en particulier de 250 à 300 mg KOH/g.

8. Composition selon l'une des revendications précédentes,
**caractérisée en ce que** le polyacrylate polyol **PA** et le polyester polyol **PE** sont présents en une quantité telle que le rapport pondéral **PA/PE** se situe dans la plage allant de 2,5 à 20, de 2,5 à 15, de 3,75 à 10, de 4,5 à 7,5, en particulier de 5 à 7.

9. Utilisation d'une composition selon l'une des revendications 1 à 8 en tant que revêtement.

10. Utilisation selon la revendication 9 dans un système de revêtement, comprenant
- de préférence un apprêt, en particulier un apprêt à base de résine époxy, de préférence d'une épaisseur de couche comprise dans la plage allant de 80 à 500 µm, en particulier de 100 à 300 µm, et
- au moins une couche de la composition décrite dans les revendications 1 à 8, de préférence d'une épaisseur de couche comprise dans la plage allant de 40 à 250 µm, de 60 à 150 µm, en particulier de 80 à 100 µm.

11. Procédé comprennent l'étape d'application d'une composition selon l'une des revendications 1 à 11 dans son temps de gélification comme revêtement sur un substrat, dans lequel le temps de gélification est déterminé selon la norme DIN 16 945.
